(19) Europäisches Patentamt European Patent Office Office européen des brevets

(11) **EP 4 597 887 A1**

(12) **EUROPEAN PATENT APPLICATION**
published in accordance with Art. 153(4) EPC

(43) Date of publication:
06.08.2025 Bulletin 2025/32

(21) Application number: 22960063.0

(22) Date of filing: 29.09.2022

(51) International Patent Classification (IPC):
*H04L 1/00* (2006.01)          *H04W 24/08* (2009.01)
*H04W 72/04* (2023.01)

(52) Cooperative Patent Classification (CPC):
H04L 1/00; H04W 24/08; H04W 72/04

(86) International application number:
PCT/CN2022/122731

(87) International publication number:
WO 2024/065426 (04.04.2024 Gazette 2024/14)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **GAO, Xueyuan
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **CHANNEL QUALITY INDICATION (CQI) REPORTING METHOD AND APPARATUS, DEVICE,
AND STORAGE MEDIUM**

(57)    The present disclosure provides a CQI reporting method and apparatus, a device, and a storage medium. The method comprises: determining at least one first moment; calculating a CQI of a terminal device at the first moment; and reporting the CQI to a base station. Using the method of the present disclosure, a terminal device reports CQI corresponding to the terminal device at a number of moments to a base station, so that the base station can perform downlink transmission using a corresponding CQI at a corresponding moment on the basis of the CQIs reported by the terminal device, thereby avoiding a situation in which "when a base station performs downlink transmission to a terminal device moving at a medium-to-high speed, the CQI of the base station does not correspond to a current channel state." This ensures downlink transmission accuracy and stability, and improves communication system performance.

EP 4 597 887 A1

```
┌─────────────────────────────────────────────┐
│   Determining at least one first moment      │──── 201
└─────────────────────────────────────────────┘
                      │
                      ▼
┌─────────────────────────────────────────────┐
│ Calculating CQIs of the terminal for the at  │──── 202
│            least one first moment             │
└─────────────────────────────────────────────┘
                      │
                      ▼
┌─────────────────────────────────────────────┐
│   Reporting the CQIs to a base station        │──── 203
└─────────────────────────────────────────────┘
```

Fig. 2

**Description**

TECHNICAL FIELD

The disclosure relates to the field of communication technologies, and in particular, to a CQI reporting method, apparatus, device and storage medium.

BACKGROUND

In a communication system, a terminal typically needs to report Channel Status Information (CSI) to a network device, so that the network device can achieve high-performance and high-quality downlink transmission to the terminal based on the CSI reported by the terminal. The CSI includes at least Channel Quality Indication (CQI). Moreover, for a terminal that moves at medium to high speeds, its channel will rapidly change in the time domain, resulting in different CQIs corresponding to the channel at different moments. Based on this, it is usually necessary to predict or determine the CQIs corresponding to the channel of the terminal at future moments, and report the predicted CQIs to the base station to ensure that the network device knows the CQIs corresponding to the channel at future moments based on the report of the terminal, and uses the CQI corresponding to each moment in the future to achieve downlink transmission at that moment, thereby ensuring the accuracy and stability of downlink transmission.

However, the specific implementation methods for predicting CQIs of which future moments and how to report predicted CQIs have not yet been defined.

SUMMARY

The present disclosure proposes a CQI reporting method, apparatus, device, and storage medium for determining CQIs of which future moments to predict, as well as a method for a terminal to report the predicted CQIs.

In a first aspect, embodiments of the present disclosure provide a CQI reporting method. The method is performed by a terminal, and includes:

> determining at least one first moment;
> calculating CQIs of the terminal for the at least one first moment; and
> reporting the CQIs to a base station.

In this disclosure, a CQI reporting method is provided, in which the terminal determines at least one first moment and calculates the CQIs of the terminal for the lease one first moment. Afterwards, the terminal reports the CQIs to the base station. From this, it can be seen that in the method of the present disclosure, the terminal determines CQIs for which specific moments need to be reported, and after calculating the CQIs at those moments, it reports the CQIs to the base station.

That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

In a second aspect, embodiments of the present disclosure provide a CQI reporting method. The method is performed by a base station, and includes: receiving CQIs for at least one first moment reported by a terminal.

In a third aspect, embodiments of the present disclosure provide a communication device. The device is configured in a terminal, and includes: a processing module, configured to determine at least one first moment;

the processing module is further configured to calculate CQIs of the terminal for the at least one first moment; a transceiver module, configured to report the CQIs to a base station.

In a fourth aspect, embodiments of the present disclosure provide a communication device. The device is configured in a base station, and includes: a transceiver module, configured to receive CQIs for at least one first moment reported by the terminal.

In a fifth aspect, embodiments of the present disclosure provide a communication device. The communication device includes a processor, which when calling a computer program stored in a memory, implements the method described in the first aspect.

In a sixth aspect, embodiments of the present disclosure provide a communication device. The communication device includes a processor, which when calling a computer program stored in a memory, implements the method described in the second aspect.

In a seventh aspect, embodiments of the present disclosure provide a communication device. The communication device includes a processor and a memory. The memory is stored with a computer program. The processor is configured to execute the computer program stored in the memory, so as to cause the communication device to implement the method described in the first aspect.

In an eighth aspect, embodiments of the present disclosure provide a communication device. The communication device includes a processor and a memory. The memory is stored with a computer program. The processor is configured to execute the computer program stored in the memory, so as to cause the communication device to implement the method described in the second aspect.

In a ninth aspect, embodiments of the present disclosure provide a communication device, including a processor and an interface circuit; wherein the interface circuit is configured to receive code instructions and transmit the code instructions to the processor; and the processor is configured to run the code instructions, to cause the device to implement the method described in the first aspect.

In a tenth aspect, embodiments of the present disclosure provide a communication device, including a processor and an interface circuit; wherein the interface circuit is configured to receive code instructions and transmit the code instructions to the processor; and the processor is configured to run the code instructions, to cause the device to implement the method described in the second aspect.

In an eleventh aspect, embodiments of the present disclosure provide a communication system. The system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, embodiments of the present disclosure provide a computer readable storage medium, configured to store instructions used by the above terminal, which when executed, cause the terminal to implement the method described in any of the first aspect or the second aspect.

In a thirteenth aspect, the present disclosure further provides a computer program product including a computer program that, when run on a computer, causes the computer to perform the method described in any of the first aspect or the second aspect.

In a fourteenth aspect, the present disclosure provides a chip system including at least one processor and interface for supporting the network device to implement the functions involved in any of the first aspect or the second aspect, such as determining or processing at least one of the data and information involved in the above method. In one possible design, the chip system further includes a memory for storing necessary computer programs and data for the source secondary node. This chip system can be composed of chips or include chips and other discrete components.

In a fifteenth aspect, the present disclosure provides a computer program that, when run on a computer, causes the computer to perform the method described in any of the first aspect or the second aspect.

**BRIEF DESCRIPTION OF THE DRAWINGS**

The above and/or additional aspects and advantages of the present disclosure will become apparent and easily understood from the following description of the embodiments in conjunction with the accompanying drawings.

Fig. 1 is a schematic diagram of an architecture of a communication system provided in an embodiment of the present disclosure.

Fig. 2 is a schematic flowchart of a CQI reporting method provided in another embodiment of the present disclosure.

Fig. 3 is a schematic flowchart of a CQI reporting method provided in yet another embodiment of the present disclosure.

Fig. 4 is a schematic flowchart of a CQI reporting method provided in still yet another embodiment of the present disclosure.

Fig. 5 is a schematic flowchart of a CQI reporting method provided in another embodiment of the present disclosure.

Fig. 6 is a schematic flowchart of a CQI reporting method provided in yet another embodiment of the present disclosure.

Fig. 7 is a schematic flowchart of a CQI reporting method provided in still yet another embodiment of the present disclosure.

Fig. 8 is a schematic flowchart of a CQI reporting method provided in still yet another embodiment of the present disclosure.

Fig. 9 is a schematic flowchart of a CQI reporting method provided in still yet another embodiment of the present disclosure.

Fig. 10 is a schematic flowchart of a CQI reporting method provided in still yet another embodiment of the present disclosure.

Fig. 11 is a schematic flowchart of a CQI reporting method provided in still yet another embodiment of the present disclosure.

Fig. 12 is a schematic diagram of a reporting moment when reporting CQIs using the embodiment of Fig. 3 disclosed herein.

Fig. 13 is a schematic diagram of a reporting moment when reporting CQIs using the embodiment of Fig. 4 or Fig. 5 disclosed herein.

Fig. 14 is a schematic diagram of a reporting moment when reporting CQIS using the embodiment of Fig. 6 disclosed herein.

Fig. 15 is a block diagram of a communication device provided in an embodiment of the present disclosure.

Fig. 16 is a block diagram of a communication device provided in another embodiment of the present disclosure.

Fig. 17 is a block diagram of a communication device provided in an embodiment of the present disclosure.

Fig. 18 is a block diagram of a chip provided in an embodiment of the present disclosure.

## DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although various information may be described using terms such as first, second, third, etc. in this disclosure, such information should not be limited to these terms. These terms are only used to distinguish information for the same type from each other. For example, without departing from the scope of this disclosure, the first information can also be referred to as the second information, and similarly, the second information can also be referred to as the first information. Depending on the context, the word "if" used here can be interpreted as "when......" or "in case that......" or "in response to determining ......".

The following provides a detailed description of embodiments of the present disclosure, examples of which are shown in the accompanying drawings, where the same or similar reference numerals throughout represent the same or similar elements. The embodiments described below with reference to the accompanying drawings are exemplary and intended to explain the present disclosure, and should not be construed as limiting the present disclosure.

For ease of understanding, the terms involved in this disclosure are first introduced.

1. Channel Status Information (CSI)

Channel Status Information (CSI) is a general concept that includes a channel matrix. Anything that reflects the channel is called channel status information. The channel matrix is just one type of channel status information in MIMO systems. Other factors such as channel profile, multipath delay, Doppler frequency offset, MIMO channel rank, beamforming vector, etc., all belong to channel status information. The current channel matrix H can only be considered as a type of channel status information, but it is the most commonly used.

2. Channel Quality Indication (CQI)

CQI is an information indicator of channel quality, representing the current quality of the channel, corresponding to the signal-to-noise ratio of the channel, with a value range of 0-31.

In order to better understand the CQI reporting method disclosed in embodiments of the present disclosure, the following first describes the communication system to which the embodiments are applicable.

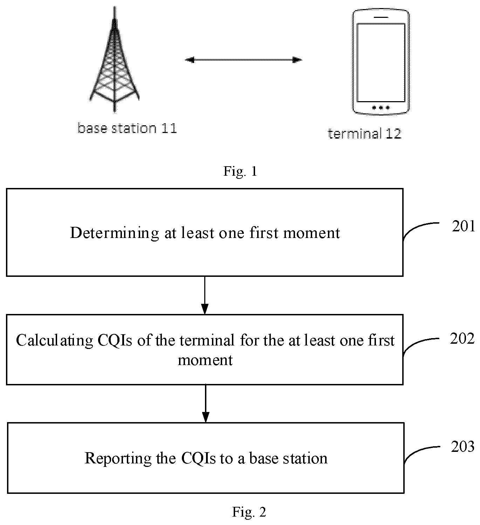

Please refer to Fig. 1, which is a schematic diagram of an architecture of a communication system provided in an embodiment of the present disclosure. The communication system may include, but is not limited to, one base station and one terminal. The number and form of devices shown in Fig. 1 are for example only and do not constitute a limitation on embodiments of the present disclosure. In practical applications, it may include two or more base stations and two or more terminals. The communication system shown in Fig. 1 takes the example of including one base station 11 and one terminal 12.

It should be noted that the technical solution disclosed in embodiments of the present disclosure can be applied to various communication systems, for example, Long Term Evolution (LTE) systems, 5th generation (5G) mobile communication systems, 5G new radio (NR) systems, or other future new mobile communication systems.

The base station 11 in embodiments of the present disclosure is an entity on the network side used for transmitting or receiving signals. For example, the base station 11 can be an evolved NodeB (eNB), a transmission reception point (TRP), a next generation NodeB (gNB) in NR systems, a base station in other future mobile communication systems, or an access node in wireless fidelity (WiFi) systems. The specific technology and equipment form adopted by the base station is not limited in embodiments of the present disclosure. The base station provided in embodiments of the present disclosure may be composed of a central unit (CU) and a distributed unit (DU), where the CU may also be referred to as a control unit. The CU-DU structure can be used to separate the protocol layers of the base station, with some protocol layer functions centrally controlled by the CU and the remaining or all protocol layer functions distributed in the DU, which is centrally controlled by the CU.

The terminal 12 in embodiments of the present disclosure may be an entity on the user side used for receiving or transmitting signals, such as a mobile phone. The terminal can also be referred to as terminal device, user equipment (UE), mobile station (MS), mobile terminal (MT), etc. The terminal can be a communication enabled car, smart car, mobile phone, wearable device, pad, computer with wireless transmitting and receiving capabilities, virtual reality (VR) terminal, augmented reality (AR) terminal, wireless terminal in industrial control, wireless terminal in autonomous driving, wireless terminal in remote medical surgery, wireless terminal in smart grids, wireless terminal in transportation safety, wireless terminal in smart city, wireless terminal in smart home, etc. The specific technology and device form adopted by the terminal is not limited in embodiments of the present disclosure.

It can be understood that the communication system described in embodiments of the present disclosure is for a clearer explanation of the technical solution provided in embodiments of the present disclosure, and does not constitute a limitation on the technical solution provided in embodiments of the present disclosure. Those skilled in the art know that with the evolution of system architecture and the emergence of new business scenarios, the technical solution provided in embodiments of the present disclosure is also applicable to similar technical problems.

The CQI reporting method, apparatus, device, and storage medium provided in embodiments of the present disclosure will be described in detail below with reference to the accompanying drawings.

Fig. 2 is a schematic flowchart of a CQI reporting method provided in an embodiment of the present disclosure. The method is performed by a terminal. As shown in Fig. 2, the CQI reporting method may include the following steps.

Step 201, determining at least one first moments.

In an embodiment of the present disclosure, the first moment may be a moment when the CQI needs to be calculated at that moment. The first moment can be a future moment or a present moment.

In an embodiment of the present disclosure, the first moment may be autonomously determined by the terminal, or may be indicated by the base station, or may be determined by the terminal according to a predefined rule, or may be determined by the terminal through negotiation with the base station, or may be determined by the terminal based on the moment it receives a specific signal sent by the base station. A detailed introduction to this section will be described in the subsequent embodiments.

Step 202, calculating CQIs of the terminal for the at least one first moment.

Step 203, reporting the CQIs to a base station.

In an embodiment of the present disclosure, when the method used by the terminal to determine the first moment in step 201 is different, the method used by the terminal to calculate the CQI for the first moment in step 202 and the method used by the terminal to report the CQI to the base station in step 203 will also be different. This part will be described in detail in subsequent embodiments.

In summary, in the CQI reporting method provided by this disclosure, the terminal determines at least one first moment and calculates the CQIs of the terminal for the lease one first moment. Afterwards, the terminal reports the CQIs to the base station. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

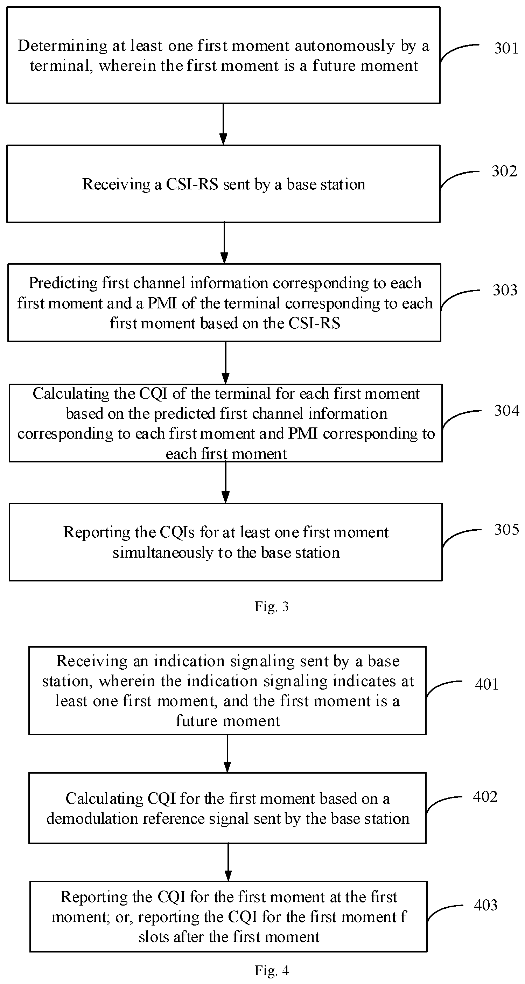

Fig. 3 is a schematic flowchart of a CQI reporting method provided in an embodiment of the present disclosure. The method is performed by a terminal. As shown in Fig. 3, the CQI reporting method may include the following steps.

Step 301, the terminal determines at least one first moment autonomously, wherein the first moment is a future moment.

In an embodiment of the present disclosure, the method for the terminal to determine the at least one first moment autonomously may include any of the followings.

The first method is to determine a moment represented by $n_{\text{ref}}$ and at least one moment calculated based on formula 1 of $l + k \times \left\lceil \frac{W_{CSI}}{N} \right\rceil$ or formula 2 of $l + k \times \left\lfloor \frac{W_{CSI}}{N} \right\rfloor$ as the at least one first moment,

wherein, $W_{CSI}$ represents a length of a reporting window, and the length of the reporting window is configured by the base station or determined by the terminal autonomously; $l$ represents a starting point of the report-

ing window, $l \geq n_{ref}$ or $l \geq n$, $n_{ref}$ represents a time domain position of a channel state information (CSI) reference resource, n represents a first reporting moment of CSI, $N$ represents a numeric count of first moments, $\lfloor \cdot \rfloor$ represents rounding downwards, $\lceil \cdot \rceil$ represents rounding upwards, $k$ is a positive integer, $k$=1, 2.....N-1, wherein, by taking different values of $k$ in formula 1 or formula 2, the at least one moment is calculated based on formula 1 or formula 2.

It should be noted that the above-mentioned $n_{ref}$ and n can be configured by the base station to the terminal, and the specific value of $l$ can be configured by the base station to the terminal. Specifically, the base station can first determine the offset value $n_{offset}$, which can be independently determined by the base station or reported to the base station after being determined by the terminal. Afterwards, the base station can determine the value of $l$ based on the offset values $n_{offset}$ and $n_{ref}$, or determine the value of $l$ based on the offset values $n_{offset}$ and $n$, and configure the specific value of $l$ to the terminal. Alternatively, the specific value of $l$ can also be determined by the terminal itself. For example, after receiving the values of $n_{ref}$ and n configured by the network device, the terminal can determine the offset value $n_{offset}$ autonomously or based on the configuration of the base station, and then determine the value of $l$ based on the offset values $n_{offset}$ and $n_{ref}$, or determine the value of $l$ based on the offset values $n_{offset}$ and $n$. Moreover, the above N can be configured by the network device to the terminal or autonomously determined by the terminal. Moreover, as mentioned above, $W_{CSI} = N_4 d$, where $N_4$ is the length of the Doppler domain basis vector (DD basis), $d$ is the DD basis compression unit, and $d$ is measured in slots.

For example, take calculating the first moment using formula 1 as an illustration. Assuming N is 3, where $k$ can be equal to 1 and 2, then substituting $k$=1, 2 into Formula 1 above yields two moments: moment $l + \left\lfloor \frac{W_{CSI}}{N} \right\rfloor$ and moment $l + 2\left\lfloor \frac{W_{CSI}}{N} \right\rfloor$. At this point, the terminal can determine the moment represented by $n_{ref}$ (i.e. the time domain position of the CSI reference resource), moment $l + \left\lfloor \frac{W_{CSI}}{N} \right\rfloor$ and moment $l + 2\left\lfloor \frac{W_{CSI}}{N} \right\rfloor$ as the first moments.

The second method is to determine at least one moment calculated based on formula 3 of $l + (k - 1) \times \left\lfloor \frac{W_{CSI}}{N} \right\rfloor$ or formula 4 of $l + (k - 1) \times \left\lceil \frac{W_{CSI}}{N} \right\rceil$ as the at least one first moment.

The difference from the first method mentioned above is that $k$ is a positive integer, $k$=1, 2.....N. By taking different values of $k$ in Formula 3 or Formula 4, at least one moment can be calculated based on Formula 3 or Formula 4.

The third method is to determine at least one moment calculated based on formula 5 of $l + (k - 1) \times d'$, $k \in [1, N]$ as the at least one first moment,

wherein, $l \geq n_{ref}$ or $l \geq n$, $n_{ref}$ represents a time domain position of a CSI reference resource, n represents a first reporting moment of CSI, $N$ represents a numeric count of first moments, $d'$ represents an interval between moments corresponding to two adjacent PMIs calculated by the terminal or a reporting interval between the two adjacent PMIs, $k$ is a positive integer, $k$=1, 2.....N, wherein, by taking different values of $k$ in formula 5, at least one moment is calculated based on formula 5.

It should be noted that the value of $d'$ mentioned above is mainly related to the way the terminal reports PMI. Specifically, when the terminal reports PMI once and the PMI reported at one time is a matrix composed of PMI vectors from multiple moments, $d'$ represents the interval between the moments corresponding to two adjacent PMIs in the PMI reported by the terminal. The number of PMI vectors included in the PMI reported at one time can be configured by the base station or determined independently by the terminal. When the terminal reports PMIs at different moments separately, $d'$ represents the reporting interval between two adjacent PMIs calculated by the terminal.

It should be noted that in an embodiment of the present disclosure, the terminal may have already reported CSI to the base station before autonomously determining at least one first moment, such as if the terminal has already reported CSI for the first time.

Step 302, receiving a Channel Status Information-Reference Signal (CSI-RS) sent by the base station.

Step 303, predicting first channel information corresponding to each first moment and a precoding matrix indication (PMI) corresponding to the terminal at each first moment based on the CSI-RS.

In an embodiment of the present disclosure, the first channel information predicted based on CSI-RS can be the channel information matrix H. And, the terminal can predict the first channel information at the first moment in the future by measuring CSI-RS.

Further, in an embodiment of the present disclosure, the PMI mentioned above can be determined based on either codebook structure 1 or codebook structure 2; wherein, codebook structure 1 is: $W_1 \tilde{W}_2 (W_f \otimes W_d)^H$; codebook structure 2 is: $W_1$ and $W_f$ remain unchanged relative to codebook structure 1, but multiple $W_2$ are reported relative to codebook structure 1.

The above-mentioned $W_1$, $W_f$, and $W_d$ are matrices composed of spatial basis vectors (SD basis), frequency domain basis vectors (FD basis), and DD basis, respectively. Specifically, $W_d$ may also be a unit matrix, $\overline{W}_2$ in the codebook structure 1 and $W_2$ codebook structure 2 can both be calculated based on the Rel-16/17 Type II codebook, with the dimension of being the same as the sum of the dimensions of the multiple $W_2$.

Based on this, in an embodiment of the present disclosure, the terminal predicts the $W_1$, $W_f$, $W_d$, $\overline{W}_2$ and

W2 corresponding to respective first moments by measuring the CSI-RS, and based on the predicted $W_1$, $W_f$, $W_d$, $\overline{W}_2$ and W2, determines the PMI corresponding to each first moment.

It should be noted that in an embodiment of the present disclosure, when the terminal determines at least one first moment using the first method in step 302, the at least one first moment includes a moment represented by $n_{ref}$. The calculation method for CQI for the moment represented by $n_{ref}$ can be the same as the prior art, that is, it can be obtained directly by measuring CSI-RS without prediction.

Step 304, calculating the CQI of the terminal for each first moment based on the predicated first channel information corresponding to each first moment and PMI corresponding to each first moment.

Step 305, reporting the CQIs for the at least one first moments simultaneously to the base station.

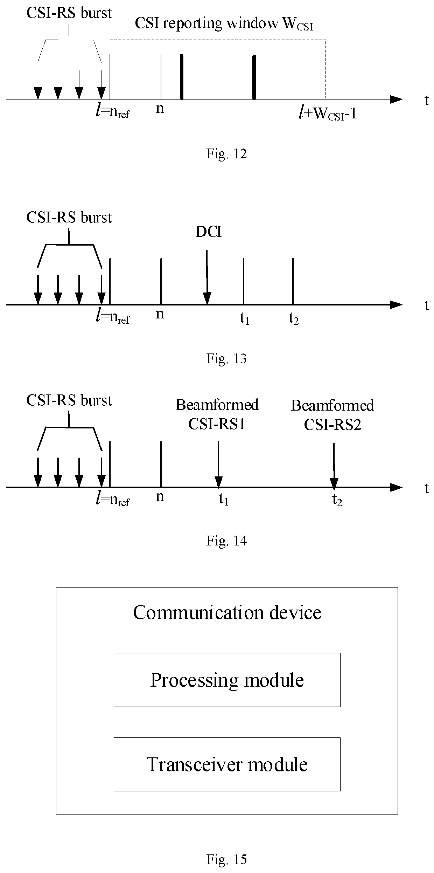

In an embodiment of the present disclosure, the moment of reporting the CQIs for the at least one first moments may be before the first moment. It should be noted that in an embodiment of the present disclosure, when the terminal determines at least one first moment using the first method in step 302, the at least one first moment includes the moment represented by $n_{ref}$. In this case, the moment of reporting the CQIs for the at least one first moment can be after the moment represented by $n_{ref}$ and before any other first moment except for the moment represented by $n_{ref}$. For example, the terminal may simultaneously report the CQIs for the at least one first moment to the base station at a certain CSI reporting moment (such as the first CSI reporting moment). For the specific introduction regarding the moment of reporting the CQIs for the at least one first moment, reference can be made to the following Fig. 12.

In summary, in the CQI reporting method provided by this disclosure, the terminal determines at least one first moment and calculates the CQIs of the terminal for the lease one first moment. Afterwards, the terminal reports the CQIs to the base station. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

Fig. 4 is a schematic flowchart of a CQI reporting method provided in an embodiment of the present disclosure. The method is performed by a terminal. As shown in Fig. 4, the CQI reporting method may include the following steps.

Step 401, receiving an indication signaling sent by a base station, wherein the indication signaling indicates at least one first moment, and the first moment is a future moment.

In an embodiment of the present disclosure, the indication signaling may be at least one of Radio Resource Control (RRC) signaling, Media Access Control-Control Element (MAC-CE) signaling, or Downlink Control Information (DCI) signaling. Moreover, the first moment can be determined by the base station autonomously and sent to the terminal through the indication signaling, or can be determined by the base station based on any of formulas 1 to 5 above and sent to the terminal through the indication signaling.

It should be noted that in an embodiment of the present disclosure, the terminal may have already reported CSI to the base station before the indication signaling, such as if the terminal has already reported CSI for the first time.

Step 402, calculating a CQI for the first moment based on a demodulation reference signal (DMRS) sent by the base station.

In an embodiment of the present disclosure, the CQI for the first moment may be predicted based on DMRS before the first moment; or, the CQI for the first moment may be calculated based on DMRS upon reaching the first moment.

Step 403, reporting the CQI for the first moment at the first moment, or reporting the CQI for the first moment f slots after the first moment.

The value of f can be configured by the base station or can be predefined.

It should be noted that in an embodiment of the present disclosure, the reason for reporting the CQI for the first moment f slots after the first moment is mainly because when the terminal calculates the CQI for the first moment upon reaching the first moment in step 402, it takes some time for the terminal to calculate the CQI for the first moment, and the terminal cannot calculate the CQI for the first moment immediately, but calculates the CQI for the first moment after the first moment. Therefore, the terminal should report the calculated CQI for the first moment f slots after the first moment.

In summary, in the CQI reporting method provided by this disclosure, the terminal determines at least one first moment and calculates the CQIs of the terminal for the lease one first moment. Afterwards, the terminal reports the CQIs to the base station. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

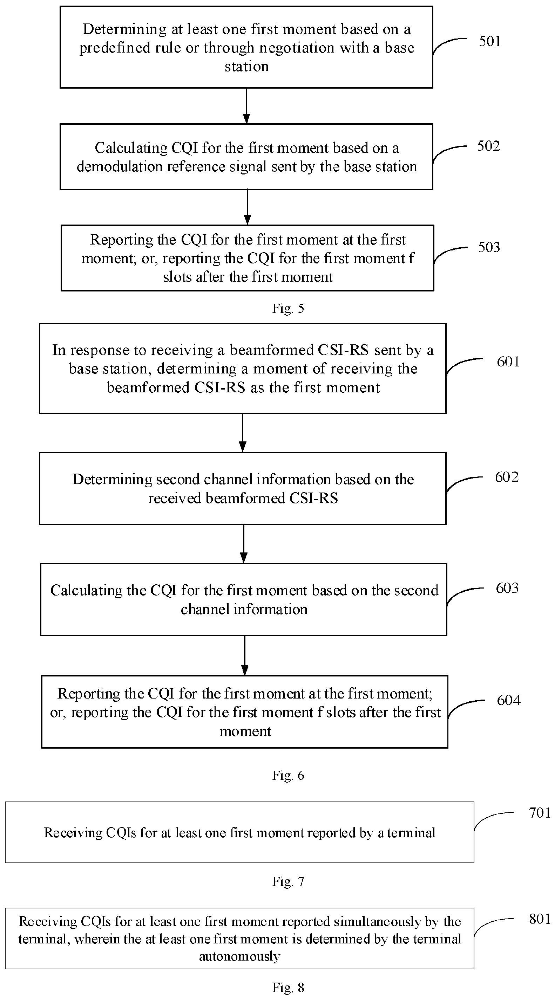

Fig. 5 is a schematic flowchart of a CQI reporting method provided in an embodiment of the present disclosure. The method is performed by a terminal. As shown in Fig. 5, the CQI reporting method may include the following steps.

Step 501, determining at least one first moment based on a predefined rule or through negotiation with a base station.

Optionally, in an embodiment of the present disclosure, determining the at least one first moment based on the predefined rule or through negotiation with the base station may include:

> determining a moment represented by $n_{ref}$ and at least one moment calculated based on formula 1 of
>
> $l + k \times \left\lfloor \frac{W_{CSI}}{N} \right\rfloor$ or formula 2 of $l + k \times \left\lceil \frac{W_{CSI}}{N} \right\rceil$ as
> the at least one first moment, based on the predefined rule or through negotiation with the base station, wherein the first moment is a future moment; or determining at least one moment calculated based
>
> on formula 3 of $l + (k-1) \times \left\lfloor \frac{W_{CSI}}{N} \right\rfloor$ or formula 4 of
>
> $l + (k-1) \times \left\lceil \frac{W_{CSI}}{N} \right\rceil$ as the at least one first moment, based on the predefined rule or through negotiation with the base station, wherein the first moment is a future moment; or
> determining at least one moment calculated based on formula 5 of $l + (k-1) \times d'$, $k \in [1,N]$ as the at least one first moment, based on the predefined rule or through negotiation with the base station, wherein the first moment is a future moment.

For the relevant introduction to formulas 1 to 5, reference can be made to the description in the above embodiments, and the difference is that in this embodiment corresponding to Fig. 4, $l$ is $n_{ref}$ or $l$ is $n$, where $n_{ref}$ represents the time domain position of the CSI reference resource and n represents the first reporting moment of CSI.

It should be noted that in an embodiment of the present disclosure, the terminal may have already reported CSI to the base station before determining at least one first moment based on the predefined rule or through negotiation with the base station, such as the terminal having already reported CSI for the first time.

Step 502, calculating CQI for the first moment based on a DMRS sent by the base station.

Step 503, reporting the CQI for the first moment at the first moment; or reporting the CQI for the first moment f slots after the first moment.

It should be noted that in the embodiment corresponding to Fig. 5, the terminal may have already reported the CSI to the base station once before reporting the CQI of the first moment, such as the terminal having already reported CSI for the first time.

For the relevant introduction to steps 502-503, reference can be made to description in the above embodiments.

In summary, in the CQI reporting method provided by this disclosure, the terminal determines at least one first moment and calculates the CQIs of the terminal for the lease one first moment. Afterwards, the terminal reports the CQIs to the base station. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

Fig. 6 is a schematic flowchart of a CQI reporting method provided in an embodiment of the present disclosure. The method is performed by a terminal. As shown in Fig. 6, the CQI reporting method may include the following steps.

Step 601, in response to receiving a beamformed CSI-RS sent by a base station, determining a moment of receiving the beamformed CSI-RS as the first moment.

In an embodiment of the present disclosure, the beamformed CSI-RS sent by the base station may be obtained by the base station beamforming the CSI-RS based on the PMI of the channel corresponding to the transmission moment when the base station wants to send the beamformed CSI-RS. The PMI of the channel corresponding to the transmission moment when the base station sends the beamformed CSI-RS can be predicted by the base station in advance at the previous moment, or directly determined based on the current channel state of the base station when the base station wants to send the beamformed CSI-RS.

Furthermore, in an embodiment of the present disclosure, the terminal may have already reported CSI to the base station before the base station sends the beamformed CSI-RS. For example, the terminal has already reported CSI for the first time.

Step 602, determining second channel information based on the received beamformed CSI-RS.

In an embodiment of the present disclosure, the second channel information mentioned above may be a matrix **HB,** where **B** is the beam used by the base station to transmit the beamformed CSI-RS, which corresponds to the PMI reported by the terminal or predicted by the base station, for example, the PMI may be the PMI of the channel corresponding to the transmission moment when the base station sends the beamformed CSI-RS; **H** is the channel information matrix.

Step 603, calculating CQI for the first moment based on the second channel information.

Step 604, reporting the CQI at the first moment; or reporting the CQI for the first moment f slots after the first moment.

For the relevant introduction to steps 603 and 604, reference can be made to description in the above embodiments.

In summary, in the CQI reporting method provided by this disclosure, the terminal determines at least one first moment and calculates the CQIs of the terminal for the lease one first moment. Afterwards, the terminal reports the CQIs to the base station. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

Fig. 7 is a schematic flowchart of a CQI reporting method provided in an embodiment of the present disclosure. The method is performed by a base station. As shown in Fig. 7, the CQI reporting method may include the following steps.

Step 701, receiving CQIs for at least one first moment reported by a terminal.

In summary, in the CQI reporting method provided by this disclosure, the base station receives the CQIs for at least one first moment reported by the terminal. The first moments are determined by the terminal. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

Fig. 8 is a schematic flowchart of a CQI reporting method provided in an embodiment of the present disclosure. The method is performed by a base station. As shown in Fig. 8, the CQI reporting method may include the following steps.

Step 801, receiving CQIs for at least one first moment simultaneously reported by a terminal, wherein the at least one first moment is determined by the terminal autonomously.

In summary, in the CQI reporting method provided by this disclosure, the base station receives the CQIs for at least one first moment reported by the terminal. The first moments are determined by the terminal. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

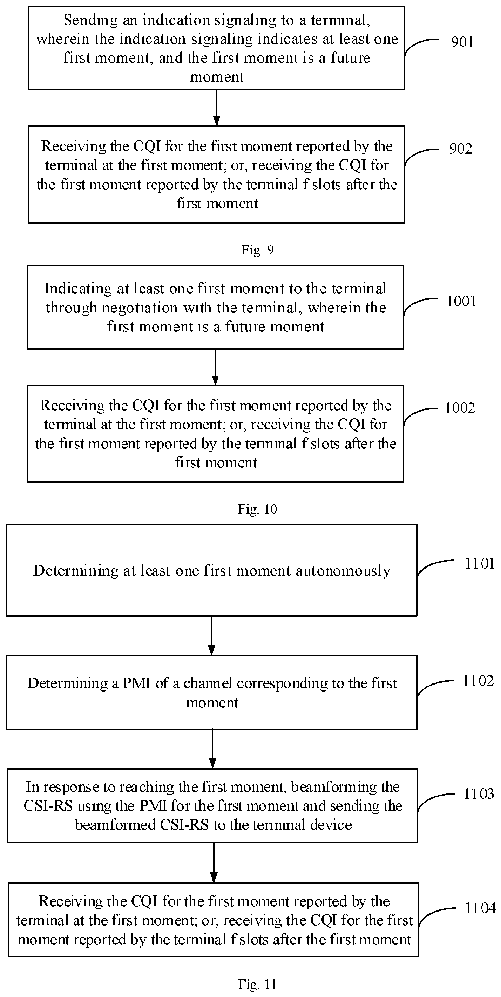

Fig. 9 is a schematic flowchart of a CQI reporting method provided in an embodiment of the present disclosure. The method is performed by a base station. As shown in Fig. 9, the CQI reporting method may include the following steps.

Step 901, sending an indication signaling to a terminal, wherein the indication signaling indicates at least one first moment, and the first moment is a future moment.

In an embodiment of the present disclosure, the first moments may be determined by the base station autonomously, or may be determined by the base station based on any of formulas 1-5 described above.

Step 902, receiving the CQI for the first moment reported by the terminal at the first moment; or receiving the CQI for the first moment reported by the terminal f slots after the first moment.

In summary, in the CQI reporting method provided by this disclosure, the base station receives the CQIs for at least one first moment reported by the terminal. The first moments are determined by the terminal. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

Fig. 10 is a schematic flowchart of a CQI reporting method provided in an embodiment of the present disclosure. The method is performed by a base station. As shown in Fig. 10, the CQI reporting method may include the following steps.

Step 1001, indicating at least one first moment to the terminal through negotiation with the terminal, wherein the first moment is a future moment.

Optionally, indicating at least one first moment to the terminal through negotiation with the terminal includes:

indicating to determine a moment represented by $n_{\mathrm{ref}}$ and at least one moment calculated based on formula 1 of $l + k \times \left\lceil \frac{W_{CSI}}{N} \right\rceil$ or formula 2 of $l + k \times \left\lceil \frac{W_{CSI}}{N} \right\rceil$ as the at least one first moment, through negotiation with the base station, wherein the first moment is a future moment; or

indicating to determine at least one moment calculated based on formula 3 of $l + (k-1) \times \left\lceil \frac{W_{CSI}}{N} \right\rceil$ or formula 4 of $l + (k-1) \times \left\lceil \frac{W_{CSI}}{N} \right\rceil$ as the at least one first moment, through negotiation with the base station, wherein the first moment is a future moment; or

indicating to determine at least one moment calculated based on formula 5 of $l + (k-1) \times d'$, $k \in [1,N]$ as the at least one first moment, through negotiation with the base station, wherein the first moment is a future moment.

Step 1002, receiving the CQI for the first moment reported by the terminal at the first moment; or receiving the CQI for the first moment reported by the terminal f slots after the first moment.

In summary, in the CQI reporting method provided by this disclosure, the base station receives the CQIs for at least one first moment reported by the terminal. The first moments are determined by the terminal. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

Fig. 11 is a schematic flowchart of a CQI reporting method provided in an embodiment of the present disclosure. The method is performed by a base station. As shown in Fig. 11, the CQI reporting method may include the following steps.

Step 1101, determining at least one first moment autonomously.

In an embodiment of the present disclosure, the base station may also determine the at least one first moment based on any of formulas 1 to 5.

The at least one first moment may be periodic, or may be non-periodic.

Step 1102, determining a PMI of a channel corresponding to the first moment.

It should be noted that the PMI of the channel corresponding to the first moment mentioned above can be predicted by the base station before the first moment, or directly determined by the base station based on the channel state at the first moment upon reaching the first moment. For the specific methods for predicting or determining PMI, reference can be made to description in the above embodiments.

Step 1103, in response to reaching the first moment, beamforming a CSI-RS using the PMI at the first moment and sending the beamformed CSI-RS to the terminal.

Step 1104, receiving the CQI for the first moment reported by the terminal at the first moment; or receiving the CQI for the first moment reported by the terminal f slots after the first moment.

In summary, in the CQI reporting method provided by this disclosure, the base station receives the CQIs for at least one first moment reported by the terminal. The first moments are determined by the terminal. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

Further, the following examples will be provided to illustrate the above embodiments.

Fig. 12 is a schematic diagram of a reporting moment for reporting CQIs using the embodiment of Fig. 3 disclosed herein.

As shown in Fig. 12, assume that gNB (i.e. the aforementioned base station) sends CSI-RS to UE (i.e. the aforementioned terminal) for downlink channel measurement at multiple consecutive moments. UE can predict channel information at future moments based on measured channel information, and then calculate CSIs for these future moments based on the predicted channel information, where CSI includes calculated PMI, CQI, or RI information. PMI is calculated based on either codebook structure 1 or codebook structure 2. Set the window size WCSI for reporting CSI, and define the starting point 1 of the window as the CSI reference resource point. Assume that the number of reported CQIs is N=3, the first CQI can be calculated by the UE based on the channel measured by CSI-RS, which corresponds to the CQI determined by the CSI reference resource. Then, based on the predicted downlink channel information and corresponding PMI at each moment, the UE calculates the CQIs corresponding to moment $1 + \left\lfloor \frac{W_{CSI}}{N} \right\rfloor$ and moment $1 + 2\left\lfloor \frac{W_{CSI}}{N} \right\rfloor$, as shown by the bold lines in Fig. 12. Note that the three CQIs determined above are reported together to gNB at the reporting moment n, to enable gNB to use the CQIs determined for moments nref, $1 + \left\lfloor \frac{W_{CSI}}{N} \right\rfloor$, and $1 + 2\left\lfloor \frac{W_{CSI}}{N} \right\rfloor$ at these moments for downlink data transmission, so that the CQI and the channel during the corresponding time period can be well matched, reducing system performance loss.

Fig. 13 is a schematic diagram of a reporting moment for reporting CQIs using the embodiment of Fig. 4 or Fig. 5 disclosed herein.

As shown in Fig. 13, assume that the UE still needs to report N=3 CQIs, the gNB sends CSI-RS to the UE for downlink channel measurement at multiple consecutive moments, and the UE determines the corresponding CQI, PMI, RI and other information based on the channel information measured by the CSI-RS, and sends these information to the gNB at the reporting moment n. The gNB can predict PMIs for future moments using the received PMI through codebook structure 1 or codebook structure 2. At a certain moment, the gNB sends the DCI signaling to the UE, instructing the UE to calculate the CQIs for specified moments and triggering non periodic CSI to report the calculated two CQIs at t1 and t2, as shown in Fig. 2. The CQIs at these two moments are calculated by the UE based on the effective channel information estimated according to the received DMRS.

Fig. 14 is a schematic diagram of a reporting moment for reporting CQIs using the embodiment of Fig. 6 disclosed herein.

As shown in Fig. 14, optionally, the gNB sends beamformed CSI-RS to the UE at moments t1 and t2 respectively, and then the UE calculates the corresponding CQIs for the two moments based on the estimated effective channel information at each moment, and reports the CQIs to the gNB, as shown in Fig. 3. The beam of CSI-RS is the PMI predicted by gNB for moments t1 and t2.

Fig. 15 is a block diagram of a communication device provided in an embodiment of the present disclosure. As shown in Fig. 15, the device may include a processing module and a transceiver module.

The processing module is configured to determine at least one first moment.

The processing module is further configured to calculate CQIs of the terminal for the at least one first moment.

The transceiver module is configured to report the CQIs to a base station.

In summary, in the communication device provided by an embodiment of the present disclosure, the terminal determines at least one first moment and calculates the CQIs of the terminal for the lease one first moment. Afterwards, the terminal reports the CQIs to the base station. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

Optionally, in an embodiment of the present disclosure, the processing module is further configured to:

determine the at least one first moment autonomously, wherein the first moment is a future moment.

Optionally, in an embodiment of the present disclosure, the processing module is further configured to:

determine a moment represented by $n_{ref}$ and at least one moment calculated based on formula 1 of

$$l + k \times \left\lfloor \frac{W_{CSI}}{N} \right\rfloor$$ or formula 2 of $$l + k \times \left\lceil \frac{W_{CSI}}{N} \right\rceil$$

as the at least one first moment;
wherein, $W_{CSI}$ represents a length of a reporting window, and the length of the reporting window is configured by the base station or determined by the terminal autonomously; $l$ represents a starting point of the reporting window, $l \geq n_{ref}$ or $l \geq n$, $n_{ref}$ represents a time domain position of a channel state information (CSI) reference resource, n represents a first reporting moment of CSI, N represents a numeric count of first moments, $\lfloor \cdot \rfloor$ represents rounding downwards, $\lceil \cdot \rceil$ represents rounding upwards, $k$ is a positive integer, $k$=1, 2.....N-1, wherein, by taking different values of $k$ in formula 1 or formula 2, the at least one moment is calculated based on formula 1 or formula 2.

Optionally, in an embodiment of the present disclosure, the processing module is further configured to:

determine at least one moment calculated based on formula 3 of $$l + (k-1) \times \left\lfloor \frac{W_{CSI}}{N} \right\rfloor$$ or formula 4 of $$l + (k-1) \times \left\lceil \frac{W_{CSI}}{N} \right\rceil$$ as the at least one first moment;
wherein, $W_{CSI}$ represents a length of a reporting window, and the length of the reporting window is configured by the base station or determined by the terminal autonomously; $l$ represents a starting point of the reporting window, $l \geq n_{ref}$ or $l \geq n$, $n_{ref}$ represents a time domain position of a CSI reference resource, n represents a first reporting moment of CSI, $N$ represents a numeric count of first moments, $\lfloor \cdot \rfloor$ represents rounding downwards, $\lceil \cdot \rceil$ represents rounding upwards, $k$ is a positive integer, $k$=1, 2.....N, wherein, by taking different values of $k$ in formula 3 or formula 4, at least one moment is calculated based on formula 3 or formula 4.

Optionally, in an embodiment of the present disclosure, the processing module is further configured to:

determine at least one moment calculated based on formula 5 of $l + (k - 1) \times d'$, $k \in [1, N]$ as the at least one first moment;
wherein, $l \geq n_{\text{ref}}$ or $l \geq n$, $n_{\text{ref}}$ represents a time domain position of a CSI reference resource, n represents a first reporting moment of CSI, N represents a numeric count of first moments, $d'$ represents an interval between moments corresponding to two adjacent PMIs calculated by the terminal or a reporting interval between the two adjacent PMIs, $k$ is a positive integer, $k$=1, 2.....N, wherein, by taking different values of $k$ in formula 5, at least one moment is calculated based on formula 5.

Optionally, in an embodiment of the present disclosure, the processing module is further configured to:

receive a channel state information reference signal (CSI-RS) sent by the base station;
predict first channel information corresponding to each first moment and a precoding matrix indication (PMI) corresponding to the terminal at each first moment based on the CSI-RS;
determine the CQI of the terminal for each first moment based on the predicated first channel information corresponding to each first moment and PMI corresponding to each first moment.

Optionally, in an embodiment of the present disclosure, the transceiver module is further configured to:
report the CQIs for the at least one first moment simultaneously to the base station.

Optionally, in an embodiment of the present disclosure, the processing module is further configured to:
receive an indication signaling sent by the base station, wherein the indication signaling indicates the at least one first moment.

Optionally, in an embodiment of the present disclosure, the processing module is further configured to:
determine the at least one first moment based on a predefined rule or through negotiation with the base station.

Optionally, in an embodiment of the present disclosure, the processing module is further configured to:

determine a moment represented by $n_{\text{ref}}$ and at least one moment calculated based on formula 1 of

$$l + k \times \left\lfloor \frac{W_{CSI}}{N} \right\rfloor$$ or formula 2 of $$l + k \times \left\lceil \frac{W_{CSI}}{N} \right\rceil$$

as the at least one first moment, based on the predefined rule or through negotiation with the base station, wherein the first moment is a future moment; or
determine at least one moment calculated based on formula 3 of $$l + (k - 1) \times \left\lfloor \frac{W_{CSI}}{N} \right\rfloor$$ or formula 4 of

$$l + (k - 1) \times \left\lceil \frac{W_{CSI}}{N} \right\rceil$$ as the at least one first moment, based on the predefined rule or through negotiation with the base station, wherein the first moment is a future moment; or
determine at least one moment calculated based on formula 5 of $l + (k - 1) \times d'$, $k \in [1, N]$ as the at least one first moment, based on the predefined rule or through negotiation with the base station, wherein the first moment is a future moment.

Optionally, in an embodiment of the present disclosure, the processing module is further configured to:
calculate the CQIs for the at least one first moment based on a demodulation reference signal (DMRS) sent by the base station.

Optionally, in an embodiment of the present disclosure, the processing module is further configured to:
in response to receiving a beamformed CSI-RS sent by the base station, determine a moment of receiving the beamformed CSI-RS as the first moment.

Optionally, in an embodiment of the present disclosure, the processing module is further configured to:

determine second channel information based on received beamformed CSI-RS;
determine the CQI for the first moment based on the second channel information.

Optionally, in an embodiment of the present disclosure, the transceiver module is further configured to:

report the CQI for the first moment at the first moment; or
report the CQI for the first moment f slots after the first moment.

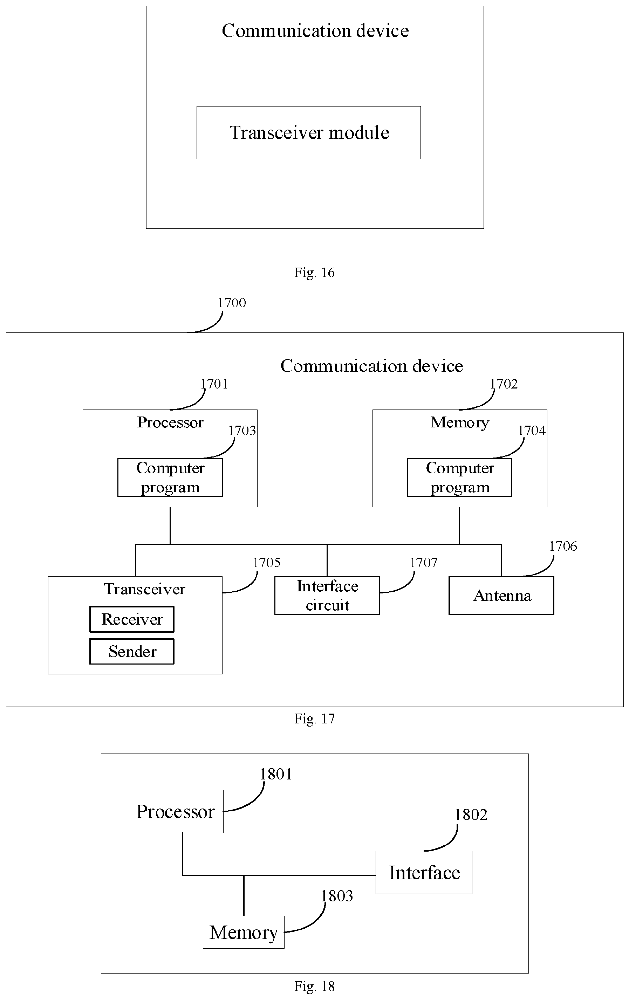

Fig. 16 is a block diagram of a communication device provided in an embodiment of the present disclosure. As shown in Fig. 16, the device may include a transceiver module.

The transceiver module is configured to receive CQIs for at least one first moment reported by a terminal.

In summary, in the communication device provided by an embodiment of the present disclosure, the base station receives the CQIs for at least one first moment reported by the terminal. The first moments are determined by the terminal. From this, it can be seen that in the method of the present disclosure, the terminal determines CQIs for which specific moments need to be reported, and after calculating the CQIs at those moments, it reports the CQIs to the base station. That is to say, this disclosure provides a method for the terminal to determine CQIs for which specific moments to predict or determine, and how to report the predicted or determined CQIs. Therefore, when the terminal is moving at medium to high speeds, the method disclosed in this disclosure can be used to enable the terminal to report the CQIs of the terminal corresponding to certain moments to the base station, so that the base station can use the corresponding CQIs for downlink transmission at the corresponding moments, based on the CQIs reported by the terminal. This avoids the situation where the base station always uses the same CQI for downlink transmission, and the CQI used by the base station for downlink transmission to the terminal moving at medium to high speeds does not correspond to the current channel state, ensuring the accuracy and stability of downlink transmission and improving the performance of the communication system.

Optionally, in an embodiment of the present disclosure, the at least one first moment is determined by the terminal autonomously;

the transceiver module is further configured to: receive the CQIs for at least one first moment reported simultaneously by the terminal.

Optionally, in an embodiment of the present disclosure, the device is further configured to:
send an indication signaling to the terminal, wherein the indication signaling indicates the at least one first moment, and the first moment is a future moment.

Optionally, in an embodiment of the present disclosure, the device is further configured to:
indicate the at least one first moment to the terminal through negotiation with the terminal, wherein the first moment is a future moment.

Optionally, in an embodiment of the present disclosure, the device is further configured to:

indicate to determine a moment represented by $n_{ref}$ and at least one moment calculated based on formula 1 of $l + k \times \left\lfloor \frac{W_{CSI}}{N} \right\rfloor$ or formula 2 of $l + k \times \left\lceil \frac{W_{CSI}}{N} \right\rceil$ as the at least one first moment, through negotiation with the base station, wherein the first moment is a future moment; or
indicate to determine at least one moment calculated based on formula 3 of $l + (k-1) \times \left\lfloor \frac{W_{CSI}}{N} \right\rfloor$ or formula 4 of $l + (k-1) \times \left\lceil \frac{W_{CSI}}{N} \right\rceil$ as the at least one first moment, through negotiation with the base station, wherein the first moment is a future moment; or
indicate to determine at least one moment calculated based on formula 5 of $l + (k-1) \times d'$, $k \in [1,N]$ as the at least one first moment, through negotiation with the base station, wherein the first moment is a future moment.

Optionally, in an embodiment of the present disclosure, the device is further configured to:

determine the at least one first moment autonomously;
determine a PMI of a channel corresponding to the first moment;
in response to reaching the first moment, beamform a CSI-RS using the PMI at the first moment and send the beamformed CSI-RS to the terminal.
optionally, in an embodiment of the present disclosure, the transceiver module is further configured to:
receive the CQI for the first moment reported by the terminal at the first moment; or
receive the CQI for the first moment reported by the terminal f slots after the first moment.

Please refer to Fig. 17, which is a block diagram of a communication device 1700 provided in an embodiment of the present disclosure. The communication device 1700 may be a network device, or may be a terminal, or may be a chip, a chip system, or a processor that supports the network device to implement the above methods, or may be a chip, a chip system, or a processor that supports the terminal to implement the above methods. This device can be used to implement the methods described in the above method embodiments, which can be referred to in the description of the above method embodiments.

The communication device 1700 may include one or more processors 1701. The processor 1701 may be a general-purpose processor or a dedicated processor, etc. For example, it may be a baseband processor or a central processing unit. The baseband processor can be used to process communication protocols and communication data, while the central processor can be used to control communication devices (such as base stations, baseband chips, terminals, terminal chips, DU or CU, etc.), execute computer programs, and process data from computer programs.

Optionally, the communication device 1700 may also include one or more memories 1702, on which computer programs 1704 may be stored. The processor 1701 executes the computer programs 1704 to enable the communication device 1700 to perform the methods described in the above method embodiments. Optionally, the memory 1702 may also store data. The communication device 1700 and the memory 1702 can be set separately or integrated together.

Optionally, the communication device 1700 may also include a transceiver 1705 and an antenna 1706. The transceiver 1705 can be referred to as a transceiver unit, transceiver machine, or transceiver circuit, etc., used to achieve transceiver functions. The transceiver 1705 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device 1700 may also include one or more interface circuits 1707. The interface circuit 1707 is used to receive code instructions and transmit them to the processor 1701. The processor 1701 executes the code instructions to cause the communication device 1700 to perform the method described in the above method embodiments.

In one implementation, the processor 1701 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 1701 may store a computer program 1703 that runs on the processor 1701 and enables the communication device 1700 to perform the method described in the above method embodiments. The computer program 1703 may be fixed in the processor 1701, in which case the processor 1701 may be implemented by hardware.

In one implementation, the communication device 1700 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device 1700 described in the above embodiments may be the first access network device or the terminal, but the scope of the communication device 1700 described in this disclosure is not limited to this, and the structure of the communication device may not be limited by Fig. 17. The communication device may be a standalone device or a part of a larger device. For example, the communication device may be:

(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal, intelligent terminal, cellular phone, wireless device, handheld device, mobile unit, vehicle mounted device, network device, cloud device, artificial intelligence device, etc.;
(6) Others and so on.

For the communication device that can be a chip or chip system, reference can be made to the block diagram of the chip shown in Fig. 18. The chip shown in Fig. 18 includes processors 1801 and interfaces 1802. The number of processors 1801 can be one or more, and the number of interfaces 1802 can be multiple.

Optionally, the chip also includes a memory 1803 for storing necessary computer programs and data.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a readable storage medium, storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The titles in the above tables indicate that the names of the parameters can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in adventure, stored, prestored, pre-negotiated, pre-configured, solidified, or pre-fired.

Those skilled in the art will recognize that the units and algorithm steps described in the embodiments of the present disclosure can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A CQI reporting method, performed by a terminal, comprising:

   determining at least one first moment;
   calculating channel quality indications (CQIs) of the terminal for the at least one first moment; and
   reporting the CQIs to a base station.

2. The method of claim 1, wherein determining the at least one first moment comprises:
   determining the at least one first moment by the terminal autonomously.

3. The method of claim 2, wherein determining the at least one first moment by the terminal autonomously comprises:

   determining a moment represented by $n_{\text{ref}}$ and at least one moment calculated based on formula 1 of $l + k \times \left\lceil \frac{w_{CSI}}{N} \right\rceil$ or formula 2 of $l + k \times \left\lceil \frac{w_{CSI}}{N} \right\rceil$ as the at least one first moment;

wherein, $W_{CSI}$ represents a length of a reporting window, and the length of the reporting window is configured by the base station or determined by the terminal autonomously; $l$ represents a starting point of the reporting window, $l \geq n_{ref}$ or $l \geq n$, $n_{ref}$ represents a time domain position of a channel state information (CSI) reference resource, n represents a first reporting moment of CSI, $N$ represents a numeric count of first moments, $\lfloor \cdot \rfloor$ represents rounding downwards, $\lceil \cdot \rceil$ represents rounding upwards, $k$ is a positive integer, $k$=1, 2.....N-1, wherein, by taking different values of $k$ in formula 1 or formula 2, the at least one moment is calculated based on formula 1 or formula 2.

4. The method of claim 2, wherein determining the at least one first moment by the terminal autonomously comprises:

    determining at least one moment calculated based on formula 3 of $l + (k-1) \times \left\lfloor \frac{W_{CSI}}{N} \right\rfloor$ or formula 4 of $l + (k-1) \times \left\lceil \frac{W_{CSI}}{N} \right\rceil$ as the at least one first moment;
    wherein, $W_{CSI}$ represents a length of a reporting window, and the length of the reporting window is configured by the base station or determined by the terminal autonomously; $l$ represents a starting point of the reporting window, $l \geq n_{ref}$ or $l \geq n$, $n_{ref}$ represents a time domain position of a CSI reference resource, n represents a first reporting moment of CSI, $N$ represents a numeric count of first moments, $\lfloor \cdot \rfloor$ represents rounding downwards, $\lceil \cdot \rceil$ represents rounding upwards, $k$ is a positive integer, $k$=1, 2.....N, wherein, by taking different values of $k$ in formula 3 or formula 4, the at least one moment is calculated based on formula 3 or formula 4.

5. The method of claim 2, wherein determining the at least one first moment by the terminal autonomously comprises:

    determining at least one moment calculated based on formula 5 of $l + (k-1) \times d'$, $k \in [1,N]$ as the at least one first moment;
    wherein, $l \geq n_{ref}$ or $l \geq n$, $n_{ref}$ represents a time domain position of a CSI reference resource, n represents a first reporting moment of CSI, $N$ represents a numeric count of first moments, $d'$ represents an interval between moments corresponding to two adjacent precoding matrix indications (PMIs) calculated by the terminal or a reporting interval between the two adjacent PMIs, $k$ is a positive integer, $k$=1, 2.....N, wherein, by taking different values of $k$ in formula 5, the at least one moment is calculated based on formula 5.

6. The method of any of claims 2-5, wherein calculating the CQIs of the terminal for the at least one first moment comprises:

    receiving a channel state information reference signal (CSI-RS) sent by the base station;
    predicting first channel information corresponding to each first moment and a PMI of the terminal corresponding to each first moment based on the CSI-RS;
    calculating the CQI of the terminal for each first moment based on the first channel information predicated and corresponding to each first moment and the PMI corresponding to each first moment.

7. The method of claim 6, wherein reporting the CQIs to the base station comprises:
reporting the CQIs for the at least one first moment simultaneously to the base station.

8. The method of claim 1, wherein determining the at least one first moment comprises:
receiving an indication signaling sent by the base station, wherein the indication signaling indicates the at least one first moment.

9. The method of claim 1, wherein determining the at least one first moment comprises:
determining the at least one first moment based on a predefined rule or through negotiation with the base station.

10. The method of claim 9, wherein determining the at least one first moment based on the predefined rule or through negotiation with the base station comprises:

    determining a moment represented by $n_{ref}$ and at least one moment calculated based on formula 1 of $l + k \times \left\lfloor \frac{W_{CSI}}{N} \right\rfloor$ or formula 2 of $l + k \times \left\lceil \frac{W_{CSI}}{N} \right\rceil$ as the at least one first moment, based on the predefined rule or through negotiation with the base station; or
    determining at least one moment calculated based on formula 3 of $l + (k-1) \times \left\lfloor \frac{W_{CSI}}{N} \right\rfloor$

or formula 4 of $l$ +

$$(k-1) \times \left\lceil \frac{W_{CSI}}{N} \right\rceil$$ as the at least one first moment, based on the predefined rule or through negotiation with the base station; or determining at least one moment calculated based on formula 5 of $l + (k - 1) \times d'$, $k \in [1,N]$ as the at least one first moment, based on the predefined rule or through negotiation with the base station, wherein the first moment is a future moment.

11. The method of claim 8 or 9, wherein calculating the CQIs of the terminal for the at least one first moment comprises:
calculating the CQIs for the at least one first moment based on a demodulation reference signal (DMRS) sent by the base station.

12. The method of claim 1, wherein determining the at least one first moment comprises:
in response to receiving a beamformed CSI-RS sent by the base station, determining a moment of receiving the beamformed CSI-RS as the first moment.

13. The method of claim 12, wherein calculating the CQIs of the terminal for the at least one first moment comprises:

determining second channel information based on the beamformed CSI-RS received;
determining the CQI for the first moment based on the second channel information.

14. The method of claim 8 or 9 or 12, wherein reporting the CQIs to the base station comprises:

reporting the CQI for the first moment at the first moment; or
reporting the CQI for the first moment $f$ slots after the first moment.

15. A CQI reporting method, performed by a base station, comprising:
receiving CQIs for at least one first moment reported by a terminal.

16. The method of claim 15, wherein the at least one first moment is determined by the terminal autonomously; receiving the CQIs for at least one first moment reported by the terminal comprises:
receiving the CQIs for at least one first moment reported simultaneously by the terminal.

17. The method of claim 15, further comprising:
sending an indication signaling to the terminal, wherein the indication signaling indicates the at least one first moment.

18. The method of claim 15, further comprising:
indicating the at least one first moment to the terminal through negotiation with the terminal.

19. The method of claim 18, wherein indicating the at least one first moment to the terminal through negotiation with the terminal comprises:

indicating to determine a moment represented by $n_{ref}$ and at least one moment calculated based on formula 1 of

$$l + k \times \left\lceil \frac{W_{CSI}}{N} \right\rceil$$ or formula 2 of $$l + k \times \left\lceil \frac{W_{CSI}}{N} \right\rceil$$

as the at least one first moment, through negotiation with the base station; or
indicating to determine at least one moment calculated based on formula 3 of

$$l + (k-1) \times \left\lceil \frac{W_{CSI}}{N} \right\rceil$$ or formula 4 of

$$l + (k-1) \times \left\lceil \frac{W_{CSI}}{N} \right\rceil$$ as the at least one first moment, through negotiation with the base station; or
indicating to determine at least one moment calculated based on formula 5 of $l + (k - 1) \times d'$, $k \in [1,N]$ as the at least one first moment, through negotiation with the base station.

20. The method of claim 15, further comprising:

determining the at least one first moment autonomously;
determining a PMI of a channel corresponding to the first moment;
in response to reaching the first moment, beamforming a CSI-RS using the PMI at the first moment and sending the beamformed CSI-RS to the terminal.

21. The method of claim 17 or 18 or 20, wherein receiving the CQIs for at least one first moment reported by the terminal comprises:

receiving the CQI for the first moment reported by the terminal at the first moment; or
receiving the CQI for the first moment reported by the terminal $f$ slots after the first moment.

22. A communication device, configured in a terminal, comprising:

a processing module, configured to determine at least one first moment;
the processing module is further configured to calculate CQIs of the terminal at the at least one first moment; and
a transceiver module, configured to report the CQIs to a base station.

23. A communication device, configured in a network device, comprising:
a transceiver module, configured to receive CQIs of at least one first moment reported by a terminal.

24. A communication device, comprising a processor and a memory, wherein the memory stores a computer program, the processor is configured to execute the computer program stored in the memory to cause the device to perform the method according to any of claims 1-14, or the processor is configured to execute the computer program stored in the memory to cause the device to perform the method according to any of claims 15-22.

25. A communication device, comprising a processor and an interface circuit, wherein

the interface circuit is configured to receive code instructions and transmit the code instructions to the processor;
the processor is configured to run the code instructions to perform the method according to any of claims 1-14, or run the code instructions to perform the method according to any of claims 15-22.

26. A computer readable storage medium, stored with instructions which, when executed, cause the method of any of claims 1-14 to be implemented, or when executed, cause the method of any of claims 15-22 to be implemented.

base station 11    terminal 12

Fig. 1

| Determining at least one first moment | 201 |

| Calculating CQIs of the terminal for the at least one first moment | 202 |

| Reporting the CQIs to a base station | 203 |

Fig. 2

Determining at least one first moment autonomously by a terminal, wherein the first moment is a future moment ⟩— 301

Receiving a CSI-RS sent by a base station ⟩— 302

Predicting first channel information corresponding to each first moment and a PMI of the terminal corresponding to each first moment based on the CSI-RS ⟩— 303

Calculating the CQI of the terminal for each first moment based on the predicted first channel information corresponding to each first moment and PMI corresponding to each first moment ⟩— 304

Reporting the CQIs for at least one first moment simultaneously to the base station ⟩— 305

Fig. 3

Receiving an indication signaling sent by a base station, wherein the indication signaling indicates at least one first moment, and the first moment is a future moment ⟩— 401

Calculating CQI for the first moment based on a demodulation reference signal sent by the base station ⟩— 402

Reporting the CQI for the first moment at the first moment; or, reporting the CQI for the first moment f slots after the first moment ⟩— 403

Fig. 4

Determining at least one first moment based on a
predefined rule or through negotiation with a base
station — 501

Calculating CQI for the first moment based on a
demodulation reference signal sent by the base station — 502

Reporting the CQI for the first moment at the first
moment; or, reporting the CQI for the first moment f
slots after the first moment — 503

Fig. 5

In response to receiving a beamformed CSI-RS sent by a
base station, determining a moment of receiving the
beamformed CSI-RS as the first moment — 601

Determining second channel information based on the
received beamformed CSI-RS — 602

Calculating the CQI for the first moment based on the second
channel information — 603

Reporting the CQI for the first moment at the first moment;
or, reporting the CQI for the first moment f slots after the first
moment — 604

Fig. 6

Receiving CQIs for at least one first moment reported by a terminal — 701

Fig. 7

Receiving CQIs for at least one first moment reported simultaneously by the
terminal, wherein the at least one first moment is determined by the terminal
autonomously — 801

Fig. 8

Sending an indication signaling to a terminal, wherein the indication signaling indicates at least one first moment, and the first moment is a future moment — 901

Receiving the CQI for the first moment reported by the terminal at the first moment; or, receiving the CQI for the first moment reported by the terminal f slots after the first moment — 902

Fig. 9

Indicating at least one first moment to the terminal through negotiation with the terminal, wherein the first moment is a future moment — 1001

Receiving the CQI for the first moment reported by the terminal at the first moment; or, receiving the CQI for the first moment reported by the terminal f slots after the first moment — 1002

Fig. 10

Determining at least one first moment autonomously — 1101

Determining a PMI of a channel corresponding to the first moment — 1102

In response to reaching the first moment, beamforming the CSI-RS using the PMI for the first moment and sending the beamformed CSI-RS to the terminal device — 1103

Receiving the CQI for the first moment reported by the terminal at the first moment; or, receiving the CQI for the first moment reported by the terminal f slots after the first moment — 1104

Fig. 11

CSI-RS burst

CSI reporting window $W_{CSI}$

$l=n_{ref}$  n  $l+W_{CSI}-1$  t

Fig. 12

CSI-RS burst

DCI

$l=n_{ref}$  n  $t_1$  $t_2$  t

Fig. 13

CSI-RS burst

Beamformed CSI-RS1

Beamformed CSI-RS2

$l=n_{ref}$  n  $t_1$  $t_2$  t

Fig. 14

Communication device

Processing module

Transceiver module

Fig. 15

Communication device

Transceiver module

Fig. 16

1700

Communication device

1701

Processor

1703

Computer program

1702

Memory

1704

Computer program

Transceiver

Receiver

Sender

1705

Interface circuit

1707

Antenna

1706

Fig. 17

Processor

1801

Interface

1802

Memory

1803

Fig. 18

## INTERNATIONAL SEARCH REPORT

| International application No. |
|---|
| **PCT/CN2022/122731** |

**A.    CLASSIFICATION OF SUBJECT MATTER**

H04L1/00(2006.01)i;  H04W24/08(2009.01)i;  H04W72/04(2023.01)i

According to International Patent Classification (IPC) or to both national classification and IPC

**B.    FIELDS SEARCHED**

Minimum documentation searched (classification system followed by classification symbols)

IPC:  H04L H04W

Documentation searched other than minimum documentation to the extent that such documents are included in the fields searched

Electronic data base consulted during the international search (name of data base and, where practicable, search terms used)

CNTXT; CNKI; VEN; ENTXT; USTXT; WOTXT; EPTXT; 3GPP: 信道质量, 指示, 信道状态信息, 参考信号, 上报, 报告, 确定, 多, 时刻, 时间, 时频, 未来, 预测, 时间窗, 上报窗, 窗口, CQI, Channel Quality, Indication, CSI, channel state information, CSI-RS, report+, window

**C.    DOCUMENTS CONSIDERED TO BE RELEVANT**

| Category* | Citation of document, with indication, where appropriate, of the relevant passages | Relevant to claim No. |
|---|---|---|
| X | CN 114765483 A (VIVO MOBILE COMMUNICATION CO., LTD.) 19 July 2022 (2022-07-19) description, paragraphs [0001]-[0003] and [0022]-[0122] | 1-26 |
| X | CN 104641584 A (HUAWEI TECHNOLOGIES CO., LTD.) 20 May 2015 (2015-05-20) description, paragraphs [0050]-[0160] | 1, 2, 8, 9, 11, 14-18, 20-26 |
| X | CN 110049571 A (RESEARCH INSTITUTE CHINA MOBILE COMMUNICATIONS CORP. et al.) 23 July 2019 (2019-07-23) description, paragraphs [0124]-[0298] | 1, 8, 14-17, 21-26 |
| X | CN 102882653 A (HUAWEI TECHNOLOGIES CO., LTD.) 16 January 2013 (2013-01-16) description, paragraphs [0025]-[0100] | 1, 2, 15, 16, 22-26 |
| A | US 2008101280 A1 (QUALCOMM INC.) 01 May 2008 (2008-05-01) entire document | 1-26 |

☑ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 June 2023** | **16 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/122731**

| C. | DOCUMENTS CONSIDERED TO BE RELEVANT | |
|---|---|---|
| Category* | Citation of document, with indication, where appropriate, of the relevant passages | Relevant to claim No. |
| A | XIAOMI. "Remaining Issues on M-TRP Beam Management, SRS and CSI Enhancement" *3GPP TSG RAN WG1 #109-e R1-2203773*, 25 April 2022 (2022-04-25), entire document | 1-26 |

Form PCT/ISA/210 (second sheet) (July 2022)

## INTERNATIONAL SEARCH REPORT
### Information on patent family members

International application No.

**PCT/CN2022/122731**

| Patent document cited in search report | | | Publication date (day/month/year) | Patent family member(s) | | | Publication date (day/month/year) |
|---|---|---|---|---|---|---|---|
| CN | 114765483 | A | 19 July 2022 | None | | | |
| CN | 104641584 | A | 20 May 2015 | None | | | |
| CN | 110049571 | A | 23 July 2019 | None | | | |
| CN | 102882653 | A | 16 January 2013 | None | | | |
| US | 2008101280 | A1 | 01 May 2008 | BRPI | 0717269 | A2 | 16 June 2015 |
| | | | | BRPI | 0717269 | B1 | 15 September 2020 |
| | | | | EP | 2074727 | A2 | 01 July 2009 |
| | | | | EP | 2074727 | B1 | 16 March 2016 |
| | | | | TW | 200828859 | A | 01 July 2008 |
| | | | | TWI | 366362 | B | 11 June 2012 |
| | | | | KR | 20090058033 | A | 08 June 2009 |
| | | | | KR | 101080478 | B1 | 04 November 2011 |
| | | | | RU | 2009115701 | A | 10 November 2010 |
| | | | | RU | 2414075 | C2 | 10 March 2011 |
| | | | | CA | 2662349 | A1 | 03 April 2008 |
| | | | | CA | 2662349 | C | 13 August 2013 |
| | | | | ES | 2575953 | T3 | 04 July 2016 |
| | | | | JP | 2010505369 | A | 18 February 2010 |
| | | | | JP | 5021748 | B2 | 12 September 2012 |
| | | | | US | 8068427 | B2 | 29 November 2011 |
| | | | | WO | 2008039856 | A2 | 03 April 2008 |
| | | | | WO | 2008039856 | A3 | 29 May 2008 |
| | | | | JP | 2012178841 | A | 13 September 2012 |
| | | | | JP | 5591861 | B2 | 17 September 2014 |
| | | | | HUE | 027190 | T2 | 28 October 2016 |

Form PCT/ISA/210 (patent family annex) (July 2022)